# EUROPEAN PATENT SPECIFICATION

(11) **EP 2 896 478 B1**
(45) Date of publication and mention of the grant of the patent: **19.10.2016**
(21) Application number: 12884988.2
(22) Date of filing: 10.12.2012
(51) Int. Cl.: B23B 51/00

(54) **DRILLING TOOL**
BOHRWERKZEUG
OUTIL DE FORAGE

(30) Priority: 21.09.2012 CN 201210353914
(43) Date of publication of application: 22.07.2015
(73) Proprietor: Zhuzhou Cemented Carbide Cutting Tools Co., Ltd., Zhuzhou, Hunan 412007 (CN)
(72) Inventor: WANG, Shequan, Zhuzhou Hunan 412007 (CN); JIANG, Aisheng, Zhuzhou, Hunan 412007 (CN); LIU, Min, Zhuzhou, Hunan 412007 (CN)
(74) Representative: ProI European Patent Attorneys
(86) International application number: PCT/CN2012/086259
(87) International publication number: WO 2014/044001

(56) References cited:
- WO-A1-2011/070652
- CN-A- 101 027 155
- CN-A- 101 605 622
- CN-A- 102 046 312
- CN-A- 102 159 351
- CN-U- 202 763 145
- CN-U- 202 763 145
- US-A- 5 114 286
- US-A1- 2004 208 716
- US-A1- 2009 116 920
- US-A1- 2009 116 920
- US-A1- 2012 121 347

## Description

### FIELD OF INVENTION

The present invention relates a drilling tool according to the preamble of claim 1. Such a drilling tool is known from US 2012/0121347 A.

### DESCRIPTION OF RELATED ART

In order to extend the useful life of cutting part, valuable cemented carbide or similar material is usually adopted as cutting tool materials in drilling; due to the characteristics of high hardness and good abrasion resistance of those materials, it is very difficult to machine; as a result, the production and process of drilling tool are relatively costly; at present, common drilling tools are assembled by a cutting component and a holding component; the cutting component is made from valuable cemented carbide or similar material with high hardness and good abrasion resistance; the holding component is made from materials with high elasticity; cutting component could be replaced alone if it is abraded, which could cut down the costs of drilling.

The Chinese patent application of publication number CN101856735 disclosed a drilling cutter, comprising a drill point part and a holding part, wherein the center of the bottom of the drill point part is provided with a fixed boss; the center of the top of the holding part is provided with a fixed seat, which is capable of holding the fixed boss through elastic deformation; a slot. which enables the fixed seat to elastically open, is provided on the holding part; the slot is set along a central axis of the cutter; the bottom of the slot is provided with two extension segments, which are distributed in a V shape; and a pair of torque acting surfaces are provided on two walls of the central section of the slot. The two extension segments, distributed in a V shape, are symmetrically provided along the two sides of the central axis. The size of radial cross section in the fixed boss is gradually reducing from the bottom of drill point part to top. The junction surface between fixed boss and fixed seat are smooth surface or combination surface, whose symmetry center is on the central axis, symmetrical centric. The drilling cutter can realize the process of assembling and disassembling of drill point part through a pair of torque acting surfaces; the bottom of the slot is provided with two extension segments which are distributed in a V shape to increase the amount of elastic deformation of fixed seats; there are some issues as follows in the actual cutting process:
1. The pair of torque acting surfaces is provided on the middle of the slot between two fixed seats; cam spanner can realize the process of assembling and disassembling of drill point part through the torque acting surfaces. In order to transmit major torque of assembling and disassembling, the larger shape of the common cam spanner, the larger shape of the torque acting surfaces matched with cam spanner. In the actual process of drilling, chips are discharged along the cutter groove. When chips pass through the torque acting surfaces, improper twist of chips may be easily occurred. Chips couldn't be discharged from the cutter groove rapidly. As a result, fixed seats of the holding part could be broken near the torque acting surfaces.
2. The bottom of the slot is provided with two extension segments which are distributed in a V shape, increasing the amount of elastic deformation of fixed seats, making it is easy to assemble and disassemble the drill point part. In the meanwhile, two extension segments which are distributed in a V shape, greatly reducing the strength of fixed seats of holding part, and cutting vibration can be easily occurred, reducing the quality of the machined surface.

### SUMMARY OF THE PRESENT INVENTION

It is an object of the present invention to overcome or ameliorate at least one of the disadvantages of the prior art, or to provide a useful alternative. The object of the invention, in at least one preferred form is to provide a drilling tool, which is simple in structure, firm connection, good stability, and high impact resistance.

According to the present invention, the foregoing and other objects and advantages are attained by the drilling tool according to claim 1.

Preferably, on the top of each elastic holding portion, the circumference protrusion and the location protrusion there between are provided with an axial basic surface; at the bottom of cutting portion, the torque transfer surface and the location notch there between are provided with an axial location surface; said axial basic surface is contact with said axial location surface.

Preferably, said two elastic holding portions there between is provided with a slot bottom surface; the slot bottom surface and the bottom surface provided on said connecting portion there between is provided with a preload clearance.

Preferably, the bottom surface provided on connecting portion and exterior cylindrical surface there between is provided with a conical surface; on the bottom of two elastic holding portions there between are provided with a pair of guiding surfaces matched with said conical surface; said conical surface is contact with said guiding surface.

Preferably, the slot bottom surface is provided with a flexible seam.

Preferably, each recess is provided with two recess side surfaces and a recess bottom surface; two recess side surfaces are symmetrically provided on the different sides of the recess bottom surface; each protrusion is provided with two protrusion surfaces and a protrusion bottom surface; two protrusion surfaces are symmetrically provided on the two sides of the protrusion bottom surface.

Preferably, the acute angles between two recess side surfaces and recess bottom surface are α; the acute angles between two protrusion surfaces and protrusion bottom surface are β; 30°≤α≤80°; 30°≤β≤80°; 15'≤β-α≤3°.

Preferably, each recess is provided with two recess side surfaces and a recess bottom surface; said protrusion is provided with two protrusion surfaces and a protrusion bottom surface; the acute angles between two recess side surfaces and recess bottom surface are respectively α1 and α2; the acute angles between two protrusion surfaces and protrusion bottom surface are respectively β1 and β2; 30°≤α1≤80°; 30°≤α2≤80°; 30°≤β3≤80°; 30°≤β3≤80°; 15'≤β1-α1≤3°; 15'≤β2-α2≤3°.

Preferably, each recess is provided with two recess side surfaces and a recess bottom surface; said protrusion is provided with two protrusion surfaces and a protrusion bottom surface; both the inclined angles between two recess side surfaces and the feeding direction of drilling along the rotary axis of the tool, and the inclined angles between two protrusion surfaces and the feeding direction of drilling along the rotary axis of the tool, are θ; 25°≤θ≤80°.

Preferably, each recess is provided with two recess side surfaces and a recess bottom surface; said protrusion is provided with two protrusion surfaces and a protrusion bottom surface; the inclined angles, between recess side surfaces and the feeding direction of drilling along the rotary axis of the tool, are θ; the inclined angles, between two said protrusion surfaces and the feeding direction of drilling along the rotary axis of the tool, are respectively θ1 and θ2; 25°≤θ≤80°; 25°≤θ1≤80°; 25°≤θ2≤80°; 5'≤θ1-θ≤5°; 5'≤θ-θ2≤5°.

Preferably, the taper angle of said conical surface is γ1; the taper angle of said guiding surface is γ2; 15°≤γ1≤45°; 15°≤γ2≤45°; 5'≤γ1-γ2≤1°.

In comparison with the prior art, the invention has the following advantages:

The drilling tool in the present invention, its cutting component and holding component are mutually concave-convex matched through that recesses and protrusions are engaged to each other. The stability of connection structure between cutting component and holding component is greatly increased; in the meanwhile, recesses and protrusions are inclined in the feeding direction of drilling along the rotary axis of the tool; on the one side, cutting component and holding component can transmit the circumferential torque through that recesses and protrusions are engaged to each other; on the other side, the greater circumferential stress of cutting component should be bore, the more firm recesses and protrusions are mutually engaged, the greater torque are transmitted; in other words, the greater cutting stress of tool should be bore, the firmer cutting component and holding component are connected; as a result, the greater stress of cutting component should be bore, the better impact resistance of cutting component would be had. On the top of each elastic holding portion, there is provided with a circumference protrusion and a location protrusion; each location protrusion is provided with a convex surface and a convex bevel; each convex bevel is provided close to the side of circumference protrusion; said cutting portion is provided with a torque transfer surface matched with said circumference protrusion; at the bottom of cutting portion, there is provided with a location notch matched with said location protrusion; when the cutting component bear large cutting stress, the torque transmission surface is contact with the circumference protrusion; after that, when the cutting stress of cutting component bear is further increased, the torque transmission surface and circumference protrusion are responsible for the increases to prevent damage or failure of recesses and protrusions, due to exceeding its loading capacity, thus, extending the useful life of drilling tool; at the bottom of cutting portion, there is provided with a location notch matched with said location protrusion; said location notch is provided with a convex bevel and a concave bevel; when the cutting component is assembling to the holding component, the interference contact between convex bevel and concave bevel is formed, increasing the installation torque of cutting component, prompting the operator that cutting component installation is complete; when the cutting component is disassembling from the holding component, the cutting component and the holding component are separated from each other both in axial direction and circumferential direction; in this process, convex bevel and concave bevel are contact in interference contact first, then separated in friction separation; when convex bevel and concave bevel are contact in interference contact, we can prompt the operator that cutting component disassembly is complete. Simultaneously, looseness would be occurred until the cutting component bears a stress, which is in the opposite direction of drilling, and the friction and torque occurred in the interference contact of convex bevel and concave bevel should be conquered. Hence, the fit between convex bevel and concave bevel can effectively prevent looseness from happening in the cutting component.

### BRIEF DESCRIPTION OF THE DRAWINGS

Figure 1 shows the stereo structure view according to the first embodiment of the invention.
Figure 2 shows the enlarged partial view of holding component according to the first embodiment of the invention.
Figure 3 shows the front view of holding component according to the first embodiment of the invention.
Figure 4 shows the section view of A-A line in figure 3.
Figure 5 shows the section view of B-B line in figure 4.
Figure 6 shows the stereo structure view of cutting component according to the first embodiment of the invention.
Figure 7 shows the front view of cutting component according to the first embodiment of the invention.
Figure 8 shows the section view of C-C line in figure 7.
Figure 9 shows the top view of cutting component according to the first embodiment of the invention.

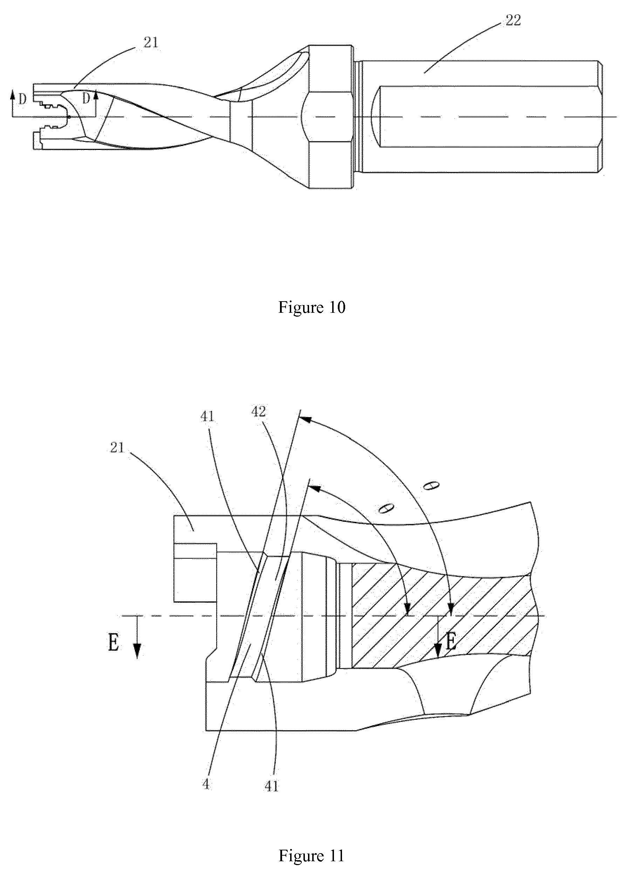

Figure 10 shows the front view of holding component according to the second embodiment of the invention.
Figure 11 shows the section view of D-D line in figure 10.

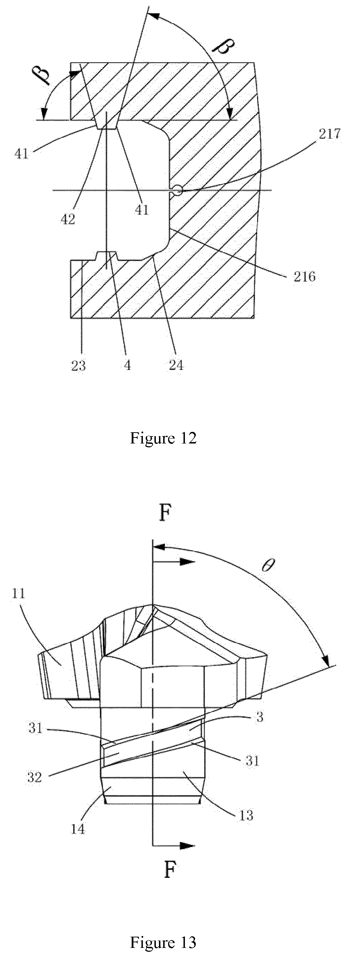

Figure 12 shows the section view of E-E line in figure 10.
Figure 13 shows the front view of cutting component according to the second embodiment of the invention.
Figure 14 shows the section view of F-F line in figure 13.

Number of elements in the drawings is as following:
1-cutting component; 2-holding component; 3-recess; 4-protrusion; 11- cutting portion; 12- connecting portion; 13- exterior cylindrical surface; 14- conical surface ; 21- elastic holding portion; 22- shank portion; 23- interior cylindrical surface; 24-guiding surface ; 31- recess side surface; 32- recess bottom surface; 41-protrusion surface; 42- protrusion bottom surface; 111- torque transfer surface; 112-location notch; 113- concave surface; 114- concave bevel; 115- axial location surface; 121- bottom surface; 211- circumference protrusion; 212-location protrusion; 213- convex surface; 214- convex bevel; 215-axial basic surface; 216-slot bottom surface; 217- flexible seam;

### THE DETAILED DESCRIPTION OF THE PREFERRED EMBODIMENT

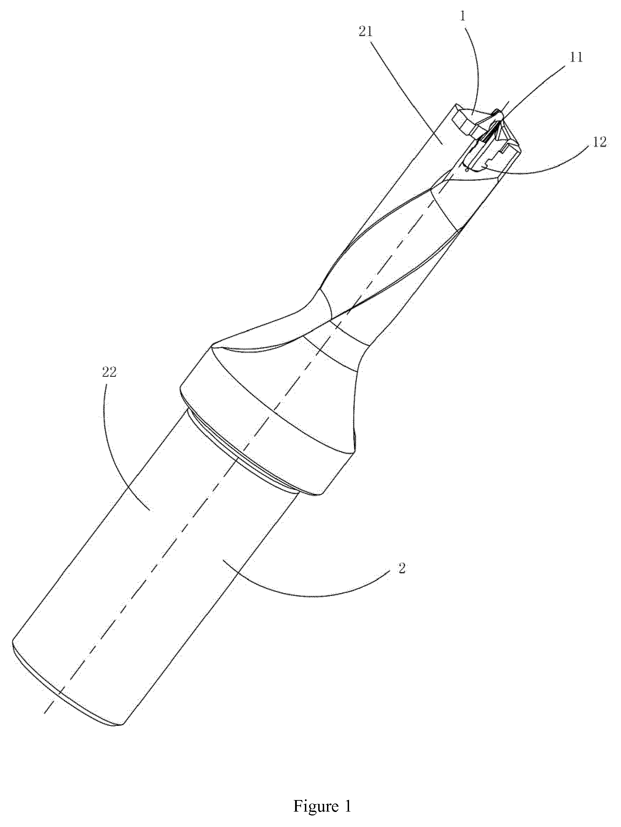

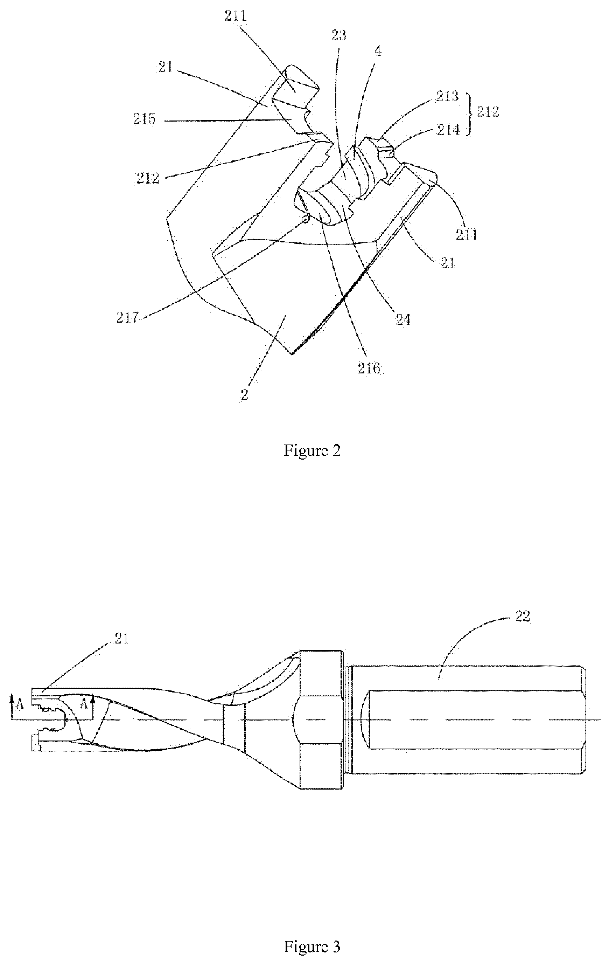

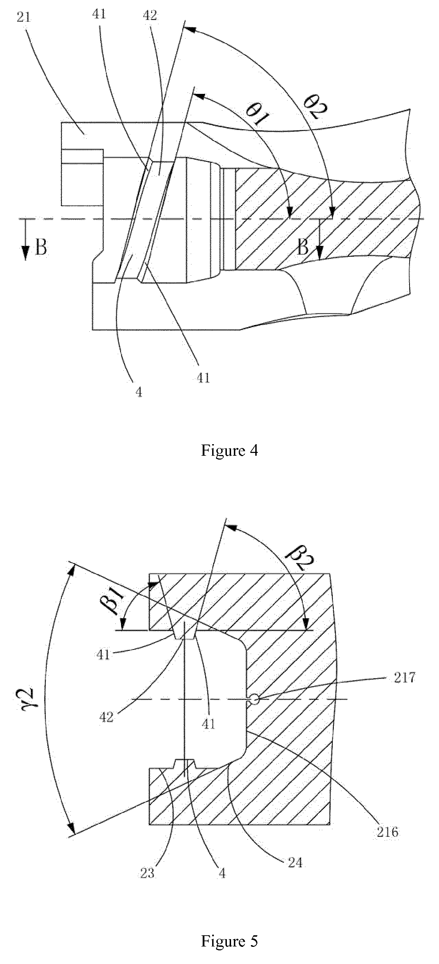

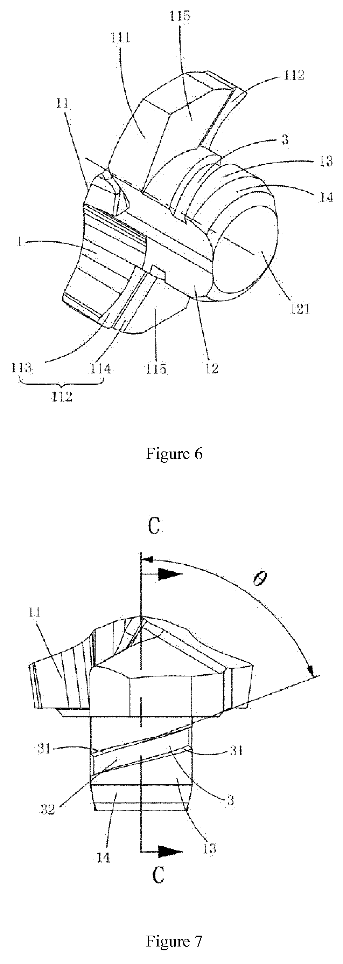

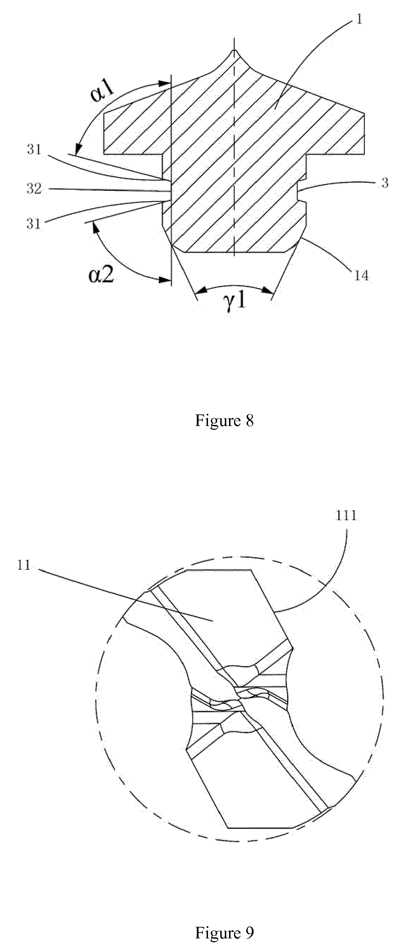

The first embodiment of drilling tool in present invention is shown as figure 1 to figure 9 ; the drilling tool comprises a cutting component 1 and a holding component 2; said cutting component 1 comprises a cutting portion 11 and a connecting portion 12; said holding component 2 comprises a shank portion 22 and two elastic holding portions 21; said connecting portion 12 is provided with an exterior cylindrical surface 13; said elastic holding portions 21 are provided with interior cylindrical surfaces 23 for holding the exterior cylindrical surface 13; said exterior cylindrical surface 13 and interior cylindrical surfaces 23 there between are provided with recesses 3 and protrusions 4 engaged to each other; in present embodiment, recesses 3 are provided on the exterior cylindrical surface 13, and protrusions 4 are provided on the interior cylindrical surfaces 23; in other embodiment, recesses 3 are provided on the interior cylindrical surfaces 23, and protrusions 4 are provided on the exterior cylindrical surface 13; the cutting component and holding component are mutually concave-convex matched through that recesses 3 and protrusions 4 are engaged to each other; the stability of connection structure between cutting component and holding component is greatly increased; in the meanwhile, recesses 3 and protrusions 4 are inclined in the feeding direction of drilling along the rotary axis of the tool; on the one side, cutting component 1 and holding component 2 can transmit the circumferential torque through that the recesses 3 and protrusions 4 are engaged to each other; on the other side, the greater circumferential stress of cutting component 1 bear, the more compact recesses 3 and protrusions 4 are mutually engaged, the greater torque be transmitted; in other words ,the greater cutting stress of tool bear, the firmer cutting component and holding component connect; a continuous and smooth cutter groove is provided from the cutting component 1 to the holding component 2, and chips can be easily discharged, which could effectively prevent the elastic holding portions 21 from fatigue damage and broken caused by plastic deformation;

In the present embodiment, on the top of each elastic holding portion 21, there is provided with a circumference protrusion 211 and a location protrusion 212; each location protrusion 212 is provided with a convex surface 213 and a convex bevel 214; each convex bevel 214 is provided close to the side of circumference protrusion 211; cutting portion 11 is provided with a torque transfer surface 111 matched with said circumference protrusion 211; when the cutting component 1 bear large cutting stress, the torque transmission surface 111 is contact with the circumference protrusion 211; after that, when the cutting stress of cutting component 1 bear is further increased, the torque transmission surface 111 and circumference protrusion 211 are responsible for the stress increases to prevent recesses 3 and protrusions 4 from damage or failure due to exceed its loading capacity, thus, extending the useful life of drilling tool; at the bottom of cutting portion 11, there is provided with a location notch 112 matched with said location protrusion 212,; said location notch 112 is provided with a concave surface 113 and a concave bevel 114; said convex bevel 214 is contact with said concave bevel 114 in the process of assembling and disassembling of cutting component 1 and holding component 2, and the interference contact between convex bevel 214 and concave bevel 114 is formed, increasing the installation torque of cutting component 1, prompting the operator that the installation of cutting component 1 is almost done; after installation already in place, the status of convex bevel 214 and concave bevel 114 can be remain contact or separate; when the cutting component 1 is disassembling from the holding component 2, the cutting component 1 and the holding component 2 are simultaneously separated from both in axial direction and circumferential direction; in this process, the status of convex bevel 214 and concave bevel 114 is contact in interference contact first, then separate from each other in friction separation; when convex bevel 214 and concave bevel 114 are contact in interference contact, we can prompt the operator that the disassembling process of cutting component 1 is already done. Simultaneously, looseness would be probably occurred until the cutting component 1 bears a stress, which is opposite to the direction of drilling, and the friction stress and torque occurred in the interference contact of convex bevel 214 and concave bevel 114 should be conquered. Hence, the fit of convex bevel 214 and concave bevel 114 can effectively prevent looseness occurred in the cutting component 1.

In the present embodiment, said circumference protrusion 211 and a location protrusion 212 there between are provided with an axial basic surface 215, on the top of each elastic holding portion 21; said torque transfer surface 111 and location notch 112 there between are provided with axial location surface 115, at the bottom of cutting portion 11, said axial basic surface 215 is contact with axial location surface 115, to realize the axial location of cutting component 1 and holding component 2, to control the separation or reunion of cutting component 1 and holding component 2, to prevent large circumferential direction slippage relative to holding component 2. between said two elastic holding portions 21, there is provided with a slot bottom surface 216; said slot bottom surface 216 and bottom surface 121 provided on said connecting portion 12 there between a preload clearance, to guarantee connecting portion 12 provided on cutting component 1 and two elastic holding portions 21 provided on holding component 2 there between can form a reliable and firm connection, also, appropriately decreasing the machining precision and assembly accuracy. The bottom surface 121 provided on connecting portion 12 and exterior cylindrical surface 13 there between is provided with a conical surface 14; the bottom of two elastic holding portions 21 is provided with a guiding surface 24 matched with conical surface 14; conical surface 14 and guiding surface 24 are contact to each other; the role of contact between conical surface 14 and guiding surface 24 is centering and guiding, in the process of assembling and connecting of cutting component 1 and holding component 2. Said slot bottom surface 216 is provided with a flexible seam 217. The flexible seam 217 could form a larger clamping stress on cutting component 1, under the condition that the holding component 2 has enough strength, effectively reducing vibration, improving finished surface quality, extending the useful life of drilling, in the cutting process.

In the present embodiment, each recess 3 is provided with two recess side surfaces 31 and a recess bottom surface 32; each protrusion 4 is provided with two protrusion surfaces 41 and a protrusion bottom surface 42; the acute angles between two recess side surfaces 31 and recess bottom surface 32 are respectively α1 and α2; the acute angles between two protrusion surfaces 41 and protrusion bottom surface 42 are respectively β1 and β2; 30°≤α1≤80°; 30°≤α2≤80°; 30°≤β1≤80°; 30°≤β2≤80°; 15'≤β1-α1≤3°; 15'≤β2-α≤3°. When the size of α1 ,α2 β1, β2 are corresponding with mentioned relationship , a larger torque between recess 3 protrusion 4 transmitted could be guaranteed ; In the meanwhile, well contact between recess 3 protrusion 4 could be maintained when elastic deformation is occurred on the two elastic holding portions 21, thus, the strengthen of the two engaged and connected to each other could be guaranteed. In present embodiment, α1=60°; α2=61°; β1=61.5°; β2=62.5°.

In the present embodiment, the inclined angles, between recess side surfaces 31 and the feeding direction of drilling along the rotary axis of the tool, are θ; the inclined angles, between two said protrusion surfaces 41 and the feeding direction of drilling along the rotary axis of the tool, are respectively θ1 and θ2; 25°≤θ≤80°; 25°≤θ1≤80°; 25°≤θ2≤80°; 5'≤θ1-θ≤5°; 5'≤θ-θ2≤5°. When the size of θ, θ1, θ2 are corresponding with mentioned relationship, it is easy and labor-saving to assemble and disassemble the cutting component 1; thus, the stress bear by recess 3 and protrusion 4 in the radial direction and axial direction could be balanced. In the present embodiment, θ=60°; 1=62°; θ2=58°.

In the present embodiment, the taper angle of said conical surface 14 is γ1; the taper angle of said guiding surface 24 is γ2; 15°≤γ1≤45°; 15°≤γ2≤45°; 5'≤γ1-γ2≤1°. When the size of γ1, γ2 are corresponding with mentioned relationship, under the conditional that flexible seam 217 centric of elastic separation between two elastic holding portions 21is formed; accurate positioning between guiding surface 24 and conical surface 14 could be remain guaranteed, making the contact area of guiding surface 24 and conical surface 14 is larger than before. Thus, optimizing the stress their bear. In present embodiment, γ1 =30°, γ2=29.5°.

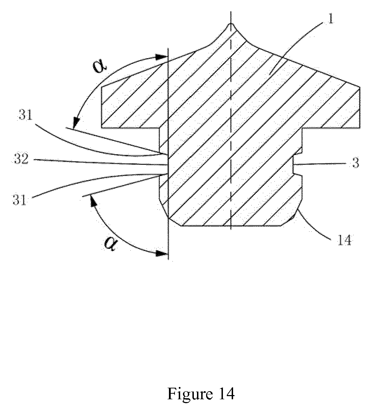

The second embodiment of drilling tool in the present invention is shown from igure 10 to figure 14. The second embodiment is basically the same with the first embodiment. The difference is shown as follows: two recess side surfaces 31 are symmetrically provided on the different sides of the recess bottom surface 32; protrusion surfaces 41 are symmetrically provided on the two sides of the protrusion bottom surface 42. The acute angles between two recess side surfaces 31 and recess bottom surface 32 are α; the acute angles between protrusion surfaces 41 and protrusion bottom surface 42 are β; 30°≤α≤80°; 30°≤β≤80°; 15'≤β-α≤3°. The inclined angles between two recess side surfaces 31 and the feeding direction of drilling along the rotary axis of the tool, and the inclined angles between two protrusion surfaces 41 and the feeding direction of drilling along the rotary axis of the tool, are θ; 25°≤θ≤80°. In the present embodiment, α=60°; β=60.5°; θ=60°. The parameter settings used in the present embodiment, making the structure of recesses 3 and protrusions 4 is simpler, more convenient to machine, better to control the clearance.

## Claims

1. A drilling tool comprising a cutting component (1) and a holding component (2), wherein said cutting component (1) comprises a cutting portion (11) and a connecting portion (12), wherein said holding component (2) comprises a shank portion (22) and two elastic holding portions (21), wherein said connecting portion (12) is provided with an exterior cylindrical surface (13), wherein said elastic holding portions (21) are provided with interior cylindrical surfaces (23) for holding the exterior cylindrical surface (13), wherein said exterior cylindrical surface (13) and interior cylindrical surfaces (23) there between are provided with recesses (3) and protrusions (4) engaged to each other, wherein said recesses (3) and protrusions (4) are inclined in a feeding direction of drilling along the rotary axis of the tool, wherein on the top of each elastic holding portion (21), there is provided with a circumference protrusion (211) and wherein said cutting portion (11) is provided with a torque transfer surface (111) matched with said circumference protrusion (211) and **characterised in that**, on the top of each holding portion (21), there is provided a location protrusion (212), wherein said each location protrusion (212) is provided with a convex surface (213) and a convex bevel (214), wherein each convex bevel (214) is provided close to the side of circumference protrusion (211), wherein at the bottom of cutting portion (11), there is provided with a location notch (112) matched with said location protrusion (212), wherein said location notch (112) is provided with a concave surface (113) and a concave bevel (114), wherein said convex bevel (214) contact with said concave bevel (114) in the process of assembling and disassembling of cutting component (1) and holding component (2).

2. The drilling tool, as recited in claim 1, wherein said circumference protrusion (211) and a location protrusion (212) there between are provided with an axial basic surface (215), on the top of each elastic holding portion (21), wherein said torque transfer surface (111) and location notch (112) there between are provided with an axial location surface (115), at the bottom of cutting portion (11), wherein said axial basic surface (215) is contact with said axial location surface (115).

3. The drilling tool, as recited in claim 1, wherein said two elastic holding portions (21) there between is provided with a slot bottom surface (216), wherein said slot bottom surface (216) and bottom surface (121) provided on said connecting portion (12) there between is provided with a preload clearance.

4. The drilling tool, as recited in claim 3, wherein said bottom surface (121) provided on connecting portion (12) and exterior cylindrical surface (13) there between is provided with a conical surface (14), wherein at the bottom of two elastic holding portions (21) there between are provided with a pair of guiding surfaces (24) matched with said conical surfaces (14), wherein said conical surfaces (14) is contact with conical surfaces (14).

5. The drilling tool, as recited in claim 4, wherein said slot bottom surface (216) is provided with a flexible seam (217).

6. The drilling tool, as recited in any one of claim 1 to claim 5, wherein said each recess (3) is provided with two recess side surfaces (31) and a recess bottom surface (32), wherein two recess side surfaces (31) are symmetrically provided on the different sides of recess bottom surface (32), wherein said protrusion (4) is provided with two protrusion surfaces (41) and a protrusion bottom surface (42), wherein protrusion surfaces (41) are symmetrically provided on the two sides of protrusion bottom surface (42).

7. The drilling tool, as recited in claim 6, wherein acute angles between two recess side surfaces (31) and recess bottom surface (32) are α, wherein acute angles between two protrusion surfaces (41) and protrusion bottom surface (42) are β; 30°≤α≤80°; 30°≤β≤80°; 15'≤β-α≤3°.

8. The drilling tool, as recited in any one of claim 1 to claim 5, wherein said recess (3) is provided with two recess side surfaces (31) and a recess bottom surface (32), wherein said protrusion (4) is provided with two protrusion surfaces (41) and a protrusion bottom surface (42), wherein acute angles between two recess side surfaces (31) and recess bottom surface (32) are respectively α1 and α2, wherein acute angles between two protrusion surfaces (41) and protrusion bottom surface (42) are respectively β1 and β2; 30°≤α1≤80°; 30°≤α2≤80°; 30°≤β1≤80°; 30°≤β2≤80°; 15'≤β1-α1≤3°; 15'≤β2-α2≤3°.

9. The drilling tool, as recited in any one of claim 1 to claim 5, wherein each recess (3) is provided with two recess side surfaces (31) and a recess bottom surface (32), wherein said protrusion (4) is provided with two protrusion surfaces (41) and a protrusion bottom surface (42), wherein both the inclined angles between two recess side surfaces (31) and the feeding direction of drilling along the rotary axis of the tool, and the inclined angles between two protrusion surfaces (41) and the feeding direction of drilling along the rotary axis of the tool, are θ;25°≤θ≤80°.

10. The drilling tool, as recited in any one of claim 1 to claim 5, wherein each recess (3) is provided with two recess side surfaces (31) and a recess bottom surface (32), wherein said protrusion (4) is provided with two protrusion surfaces (41) and a protrusion bottom surface (42), wherein the inclined angles, between recess side surfaces (31) and the feeding direction of drilling along the rotary axis of the tool, are θ, wherein the inclined angles, between two said protrusion surfaces (41) and the feeding direction of drilling along the rotary axis of the tool, are respectively θ1 and θ2; 25°≤θ≤80°; 25°≤θ1≤80°; 25°≤θ2≤80°; 5'≤θ1-θ≤5°; 5'≤θ-θ2≤5°.

11. The drilling tool, as recited in claim 4 or claim 5, wherein the taper angle of said conical surface (14) is γ1, wherein the taper angle of said guiding surface (24) is γ2; 15°≤γ1≤45°; 15°≤γ2≤45°; 5'≤γ1-γ2≤1°.

## Patentansprüche

1. Bohrwerkzeug mit einem Schneidteil (1) und einem Halteteil (2), wobei das Schneidteil (1) einen Schneidabschnitt (11) und einen Verbindungsabschnitt (12) aufweist, wobei das Halteteil (2) einen Schaftabschnitt (22) und zwei elastische Halteabschnitte (21) aufweist, wobei der Verbindungsabschnitt (12) mit einer äußeren zylindrischen Oberfläche (13) versehen ist, wobei die elastischen Halteteile (21) mit inneren zylindrischen Oberflächen (23) zum Lagern der äußeren zylindrischen Oberfläche (13) versehen sind, wobei zwischen der äußeren zylindrischen Oberfläche (13) und den inneren zylindrischen Oberflächen (23) Vertiefungen (3) und Vorsprünge (4) vorgesehen sind, welche miteinander im Eingriff sind, wobei die Vertiefungen (3) und die Vorsprünge (4) in einer Vorschubrichtung entlang der Drehachse des Bohrwerkzeugs geneigt sind, wobei an der Oberseite jedes elastischen Halteabschnitts (21) ein Umfangsvorsprung (211) vorgesehen ist, und wobei der Schneidabschnitt (11) mit einer Drehmomentübertragungsfläche (111) versehen ist, die mit dem Umfangsvorsprung (211) überein stimmt,
**dadurch gekennzeichnet, dass**
an der Oberseite jedes elastischen Halteabschnitts (21) ein Ortsvorsprung (212) vorgesehen ist, wobei jeder Ortsvorsprung (212) eine konvexe Oberfläche (213) und eine konvexe Abflachung (214) aufweist, wobei jede konvexe Abflachung (214) in der Nähe der Seite des (211) Umfangsvorsprungs vorgesehen ist, wobei am Bodenbereich des Schneidabschnitts (11) eine Kerbe (112) vorgesehen ist, welche mit dem Ortsvorsprung (212) überein stimmt, wobei die Kerbe (112) mit einer konkaven Oberfläche (113) und einer konkaven Abflachung (114) versehen ist, wobei die konvexe Abflachung (214) die konkave Abflachung (114) im Montage- und Demontageverfahren des Schneidteils (1) und des Halteteils (2) kontaktiert.

2. Bohrwerkzeug nach Anspruch 1, wobei zwischen dem Umfangsvorsprung (211) und dem Ortsvorsprung (212) eine axiale Grundfläche (215) auf der Oberseite jedes elastischen Halteabschnitts (21) vorgesehen ist, wobei zwischen der Drehmomentübertragungsfläche (111) und der Kerbe (112) eine axiale Ortsfläche (115) an der Unterseite des Schneidabschnitts (11) vorgesehen ist, wobei die axiale Basisfläche (215) mit der axialen Ortsfläche (115) in Kontakt steht.

3. Bohrwerkzeug gemäß Anspruch 1, wobei zwischen den zwei elastischen Halteabschnitten (21) eine Schlitzbodenfläche (216) vorgesehen ist, wobei zwischen der Schlitzbodenfläche (216) und der Bodenfläche (121), die am Verbindungsabschnitt (12) vorgesehen ist, eine Vorspannlücke vorgesehen ist.

4. Bohrwerkzeug nach Anspruch 3, wobei zwischen der Bodenfläche (121), welche am Verbindungsabschnitt (12) vorgesehen ist, und der äußeren zylindrischen Oberfläche (13) einer konische Fläche (14) vorgesehen ist, wobei an der Unterseite zwischen zwei elastischen Halteabschnitten (21) ein Paar Führungsflächen (24) vorgesehen sind, welche mit den konischen Flächen (14) abgestimmt sind, wobei die konischen Flächen (14) mit den Führungsflächen (24) in Kontakt stehen.

5. Bohrwerkzeug nach Anspruch 4, wobei die Schlitzbodenfläche (216) mit einer flexiblen Naht (217) versehen ist.

6. Bohrwerkzeug nach einem der Ansprüche 1 bis 5, wobei jede Vertiefung (3) mit zwei Aussparungsseitenflächen (31) und einer Aussparungsbodenfläche (32) versehen ist, wobei die zwei Aussparungsseitenflächen (31) symmetrisch an den verschiedenen Seiten der Aussparungsbodenfläche (32) vorgesehen sind, wobei der Vorsprung (4) mit zwei Vorsprungsflächen (41) und einer Vorsprungsbodenfläche (42) versehen ist, wobei Vorsprungsflächen (41) symmetrisch an den verschiedenen Seiten der Vorsprungsbodenfläche (42) vorgesehen sind.

7. Bohrwerkzeug nach Anspruch 6, wobei die spitzen Winkel zwischen den zwei Aussparungsseitenflächen (31) und der Aussparungsbodenfläche (32) α sind, wobei die spitzen Winkel zwischen den zwei Vorsprungsflächen (41) und der Vorsprungsbodenfläche (42) β sind; wobei 30°≤α≤80° ist; wobei 30°≤β≤80° ist; und wobei 15'≤β-α≤3° ist.

8. Bohrwerkzeug nach einem Ansprüche 1 bis 5, wobei die Ausnehmung (3) mit zwei Aussparungsseitenflächen (31) und einer Aussparungsbodenfläche (32) versehen ist, wobei der Vorsprung (4) mit zwei Vorsprungsflächen (41) und einer Vorsprungsbodenfläche (42) versehen ist, wobei die spitzen Winkel zwischen den zwei Aussparungsseitenflächen (31) und der Aussparungsbodenfläche (32) jeweils α1 und α2 sind, wobei die spitzen Winkel zwischen den zwei Vorsprungsflächen (41) und der Vorsprungsbodenfläche (42) jeweils β1 und β2 sind; wobei 30°≤α1≤80° ist; wobei 30°≤α2≤80° ist; wobei 30°≤β1≤80° ist; wobei 30°≤β2≤80° ist; wobei 15'≤β1-α1≤3° ist; und wobei 15'≤β2-α2≤3° ist.

9. Bohrwerkzeug nach einem der Ansprüche 1 bis 5, wobei der jede Aussparung (3) mit zwei Aussparungsseitenflächen (31) und einer Aussparungsbodenfläche (32) versehen ist, wobei der Vorsprung (4) mit zwei Vorsprungsflächen (41) und einer Vorsprungsbodenfläche (42) versehen ist, wobei die Neigungswinkel zwischen den zwei Aussparungsseitenflächen (31) und der Vorschubrichtung entlang der Drehachse des Bohrwerkzeugs und die Neigungswinkel zwischen den zwei Vorsprungsflächen (41) und der Vorschubrichtung entlang der Drehachse des Bohrwerkzeugs θ sind; wobei 25°≤θ≤80° ist.

10. Bohrwerkzeug nach einem der Ansprüche 1 bis 5, bei der jede Aussparung (3) mit zwei Aussparungsseitenflächen (31) und einer Aussparungsbodenfläche (32) versehen ist, wobei der Vorsprung (4) mit zwei Vorsprungsflächen (41) und einer Vorsprungsbodenfläche (42) versehen ist, wobei die Neigungswinkel zwischen den Aussparungsseitenflächen (31) und der Vorschubrichtung entlang der Drehachse des Bohrwerkzeugs θ sind, wobei die Neigungswinkel zwischen den zwei Vorsprungsflächen (41) und der Vorschubrichtung entlang der Drehachse des Bohrwerkzeugs jeweils θ1 und θ2 sind; wobei 25°≤θ≤80° ist; wobei 25°≤θ1≤θ80° ist; wobei 25°≤θ2≤80° ist; wobei 5'≤θ1-θ≤5° ist; und wobei 5'≤θ-θ2≤5° ist.

11. Bohrwerkzeug nach Anspruch 4 oder 5, wobei der Kegelwinkel der konischen Oberfläche (14) γ1 ist, wobei der Verjüngungswinkel der Führungsfläche (24) γ2 ist; wobei 15°≤γ1≤45° ist; wobei 15°≤γ2≤45° ist; und wobei 5'≤γ1-γ2≤1 ist.

## Revendications

1. Outil de forage comprenant un composant de coupe (1) et un composant de maintien (2), dans lequel ledit composant de coupe (1) comprend une partie de coupe (11) et une partie de liaison (12), dans lequel ledit composant de maintien (2) comprend une partie de queue (22) et deux parties de maintien élastiques (21), dans lequel ladite partie de liaison (12) est pourvue d'une surface cylindrique extérieure (13), dans lequel lesdites parties de maintien élastiques (21) sont pourvues de surfaces cylindriques intérieures (23) pour maintenir la surface cylindrique extérieure (13), dans lequel ladite surface cylindrique extérieure (13) et lesdites surfaces cylindriques intérieures (23) entre celle-ci comportent des évidements (3) et des parties saillantes (4) en prise les uns avec les autres, dans lequel lesdits évidements (3) et lesdites parties saillantes (4) sont inclinés dans une direction d'avance du forage le long de l'axe de rotation de l'outil, dans lequel en haut de chaque partie de maintien élastique (21), on a prévu une partie saillante de circonférence (211) et dans lequel ladite partie de coupe (11) comporte une surface de transfert de couple (111) en correspondance avec ladite partie saillante de circonférence (211) et **caractérisé en ce que**, en haut de chaque partie de maintien (21), on fournit une partie saillante de localisation (212), dans lequel chaque partie saillante de localisation (212) précitée est pourvue d'une surface convexe (213) et d'un biseau convexe (214), dans lequel chaque biseau convexe (214) est fourni près du côté de la partie saillante de circonférence (211), dans lequel en bas de la partie de coupe (11), on fournit une encoche de localisation (112) en correspondance avec ladite partie saillante de localisation (212), dans lequel ladite encoche de localisation (112) est pourvue d'une surface concave (113) et d'un biseau concave (114), dans lequel ledit biseau convexe (214) vient en contact avec ledit biseau concave (114) dans le processus de montage et de démontage du composant de coupe (1) et du composant de maintien (2).

2. Outil de forage, selon la revendication 1, dans lequel ladite partie saillante de circonférence (211) et une partie saillante de localisation (212) entre celle-ci comporte entre elles une surface de base axiale (215), en haut de chaque partie de maintien élastique (21), dans lequel ladite surface de transfert de couple (111) et ladite encoche de localisation (112) entre celle-ci comporte une surface de localisation axiale (115), en bas de la partie de coupe (11), dans lequel ladite surface de base axiale (215) est en contact avec ladite surface de localisation axiale (115).

3. Outil de forage, selon la revendication 1, dans lequel lesdites deux parties de maintien élastiques (21) comportent entre elles une surface inférieure d'encoche (216), dans lequel ladite surface inférieure d'encoche (216) et la surface inférieure (121) fournie sur ladite partie de liaison (12) entre celle-ci comporte un dégagement de précharge.

4. Outil de forage, selon la revendication 3, dans lequel ladite surface inférieure (121) fournie sur la partie de liaison (12) et la surface cylindrique extérieure (13) entre celle-ci comporte une surface conique (14), dans lequel en bas des deux parties de maintien élastiques (21) entre elles se trouve une paire de surfaces de guidage (24) en correspondance avec lesdites surfaces coniques (14), dans lequel lesdites surfaces coniques (14) sont en contact avec les surfaces coniques (14).

5. Outil de forage, selon la revendication 4, dans lequel ladite surface inférieure d'encoche (216) comporte un joint souple (217).

6. Outil de forage, selon l'une quelconque de la revendication 1 à la revendication 5, dans lequel chaque évidement (3) précité est pourvu de deux surfaces latérales d'évidement (31) et d'une surface inférieure d'évidement (32), dans lequel deux surfaces latérales d'évidement (31) sont fournies symétriquement sur les différents côtés de la surface inférieure d'évidement (32), dans lequel ladite partie saillante (4) est pourvue de deux surfaces de partie saillante (41) et d'une surface inférieure de partie saillante (42), dans lequel les surfaces de partie saillante (41) sont fournies symétriquement sur les deux côtés de la surface inférieure de partie saillante (42).

7. Outil de forage, selon la revendication 6, dans lequel les angles aigus entre deux surfaces latérales d'évidement (31) et la surface inférieure d'évidement (32) sont α, dans lequel les angles aigus entre deux surfaces de partie saillante (41) et la surface inférieure de partie saillante (42) sont β ; 30 °≤α≤80 ° ; 30 °≤β≤µ80 ° ; 15'≤β-α≤3°.

8. Outil de forage, selon l'une quelconque de la revendication 1 à la revendication 5, dans lequel ledit évidement (3) est pourvu de deux surfaces latérales d'évidement (31) et d'une surface inférieure d'évidement (32), dans lequel ladite partie saillante (4) est pourvue de deux surfaces de partie saillante (41) et d'une surface inférieure de partie saillante (42), dans lequel les angles aigus entre deux surfaces latérales d'évidement (31) et la surface inférieure d'évidement (32) sont respectivement α1 et α2, dans lequel les angles aigus entre deux surfaces de partie saillante (41) et la surface inférieure de partie saillante (42) sont respectivement β1 et β2 ; 30 °≤α1≤80 ° ; 30 °≤α2≤80 ° ; 30 °≤β1≤80 ° ; 30 °≤β2≤80 ° ; 15'≤β1-α1≤3 ° ; 15'≤2-α2≤3 °.

9. Outil de forage, selon l'une quelconque de la revendication 1 à la revendication 5, dans lequel chaque évidement (3) est pourvu de deux surfaces latérales d'évidement (31) et d'une surface inférieure d'évidement (32), dans lequel ladite partie saillante (4) est pourvue de deux surfaces de partie saillante (41) et d'une surface inférieure de partie saillante (42), dans lequel l'un et l'autre des angles inclinés entre deux surfaces latérales d'évidement (31) et la direction d'avance du forage le long de l'axe de rotation de l'outil, et les angles inclinés entre deux surfaces de partie saillante (41) et la direction d'avance du forage le long de l'axe de rotation de l'outil, sont θ ; 25 °≤θ≤80 °.

10. Outil de forage, selon l'une quelconque de la revendication 1 à la revendication 5, dans lequel chaque évidement (3) est pourvu de deux surfaces latérales d'évidement (31) et d'une surface inférieure d'évidement (32), dans lequel ladite partie saillante (4) est pourvue de deux surfaces de partie saillante (41) et d'une surface inférieure de partie saillante (42), dans lequel les angles inclinés, entre les surfaces latérales d'évidement (31) et la direction d'avance du forage le long de l'axe de rotation de l'outil, sont θ, dans lequel les angles inclinés, entre deux surfaces de partie saillante (41) précitées et la direction d'avance du forage le long de l'axe de rotation de l'outil, sont respectivement θ1 et θ2 ; 25 °≤θ≤80 ° ; 25 °≤θ1≤80 ° ; 25 °≤θ2≤80 ° ; 5'≤θ1-θ≤5 ° ; 5'≤θ-θ2≤5 °.

11. Outil de forage, selon la revendication 4 ou la revendication 5, dans lequel l'angle d'effilement de ladite surface conique (14) est γ1, dans lequel l'angle d'effilement de ladite surface guide (24) est γ2 ; 15 °≤γ1≤45 ° ; 15 °≤γ2≤45 ° ; 5'<γl-γ2≤1 °.
